# EUROPÄISCHE PATENTSCHRIFT

(11) **EP 1 953 397 B1**
(45) Veröffentlichungstag und Bekanntmachung des Hinweises auf die Patenterteilung: **17.03.2010**
(21) Anmeldenummer: 07001766.0
(22) Anmeldetag: 26.01.2007
(51) Int. Cl.: F16B 31/02, H01R 4/30

(54) **Abscherschraube und Verfahren zu ihrer Herstellung**
Shear screw and method for its production
Vis de cisaillement et son procédé de fabrication

(43) Veröffentlichungstag der Anmeldung: 06.08.2008
(73) Patentinhaber: Arcus Elektrotechnik Alois Schiffmann GmbH, 81673 München (DE)
(72) Erfinder: Amann, Peter, 82008 Unterhaching (DE)
(74) Vertreter: Sajda, Wolf E.

(56) Entgegenhaltungen:
- EP-A- 0 634 811
- EP-A- 1 376 764
- EP-B1- 0 514 924
- WO-A-02/18803
- WO-A-03/067102

## Beschreibung

Die Erfindung betrifft eine Abscherschraube, mit einem zylindrischen Körper, der an seiner Außenseite ein Gewinde besitzt, und mit einem zentralen Schaft, der an seinem einen Ende einen Kopf besitzt, der Angriffsflächen für ein Antriebswerkzeug aufweist, wobei auf den Schaft mindestens eine Scheibe aufgesteckt ist und wobei die Abscherschraube eine Sollbruchstelle aufweist, die eine Scherebene bildet. Die Erfindung betrifft ferner ein Verfahren zum Herstellen von derartigen Abscherschrauben.

Eine derartige Abscherschraube ist aus der EP-A-1 376 764 bekannt.

Derartige Abscherschrauben sind bekannt und insbesondere für solche Anwendungen vorgesehen, bei denen die Schraube nur mit einem vorgegebenen maximalen Drehmoment angezogen werden soll, um die von ihr festgeklemmte Komponente nicht zu beschädigen. Wird dieses maximale vorgegebene Drehmoment überschritten, so reißt der Kopf der Abscherschraube ab, und der darunter befindliche Teil der Abscherschraube sorgt für eine dauerhafte Klemmverbindung in einem Schraubverbinder.

Eine andere herkömmliche Bauform einer solchen Abscherschraube ist aus der DE-C-41 13 242 der Anmelderin bekannt und weist einen Gewindekörper mit einem Außengewinde sowie einen Abreißkopf mit Angriffsfläche für ein Werkzeug auf, wobei zwischen dem Gewindekörper und dem Abreißkopf ein Übergangsbereich vorgesehen ist, dessen Außendurchmesser sich vom Abreißkopf zum Gewindekörper hin verjüngt und eine Sollbruchstelle aufweist. Im Gebrauch wird eine derartige Abscherschraube in das Innengewinde eines Werkstücks, beispielsweise eines Schraubverbinders eingesetzt, um darin einen Leiter festzuklemmen.

Wenn dann die Schraube angezogen und das vorgegebene maximale Drehmoment überschritten wird, so reißt der Abreißkopf der Abscherschraube ab, während der übrige Teil der Abscherschraube in dem Schraubverbinder verbleibt und den Leiter mit der vorgegebenen Anpreßkraft festklemmt.

Eine derartige Abscherschraube ist somit sehr wirkungsvoll im praktischen Einsatz, denn ein Monteur kann unabhängig von langjähriger Erfahrung und der Wahl des verwendeten Werkzeugs sicherstellen, daß die Schraube ordnungsgemäß angezogen wird. Er braucht lediglich mit dem entsprechenden Werkzeug, das zum Kopf der Abscherschraube paßt, die Abscherschraube anziehen, bis der Abreißkopf abgeschert ist.

In der Praxis werden jedoch in solchen Schraubverbindern Leiter verklemmt, die unterschiedliche Querschnitte haben, mit der Folge, daß die Abscherschraube dann unterschiedlich tief in den Innenraum des Schraubverbinders eindringt, wenn sie mit einem Werkzeug angezogen wird. Damit kann die Situation eintreten, daß die Abscherschraube nach dem Abreißen des Abreißkopfes in unerwünschter Weise aus dem Schraubverbinder vorsteht, sofern der untere Bereich der Abscherschraube mit dem durchgehenden Außengewinde in seiner Länge nicht ausreichend an den Schraubverbinder und den jeweils zu verklemmenden Leiter angepaßt ist.

Bei der herkömmlichen Abscherschraube gemäß der EP-A-1 376 764 wird ein Konzept verwendet, bei dem der Schaft, der als zentraler Zapfen des Körpers der Abscherschraube ausgebildet ist, einen unrunden, beispielsweise sechseckigen Querschnitt aufweist, auf welchen entsprechende Scheiben mit komplementären Innenausnehmungen mit unrundem Querschnitt aufgesteckt sind. Das herkömmliche Konzept basiert somit auf einem Formschluß zwischen dem Zapfen und den Scheiben. Weiterhin ist bei der herkömmlichen Ausführungsform für jeden Bereich eines Zapfens, der einer Scheibe entspricht, eine eigene Sollbruchstelle vorgesehen, so daß der Kopf einer derartigen Abscherschraube im Betrieb an verschiedenen vorgegebenen Scherebenen abscheren kann.

Der Erfindung liegt die Aufgabe zugrunde, eine Abscherschraube anzugeben, die für eine Vielzahl von festzuklemmenden Werkstücken, insbesondere Kabelleiter, mit unterschiedlichem Durchmesser geeignet ist und bei der der Abreißkopf zuverlässig beim Überschreiten eines vorgegebenen Drehmoments abreißt.

Der Erfindung liegt ferner die Aufgabe zugrunde, ein Verfahren anzugeben, mit dem derartige Abscherschrauben herstellbar sind.

Die erfindungsgemäße Lösung besteht darin, eine Abscherschraube der eingangs genannten Art so auszubilden, daß der Schaft im inneren Bereich der Abscherschraube einen zylindrischen Bereich besitzt, auf den mindestens eine Scheibe aufgesteckt ist, daß die jeweiligen Scheiben zwischen einer Basis und dem Kopf der Abscherschraube eingespannt sind, und daß der Schaft eine einzige Sollbruchstelle im inneren Bereich der Abscherschraube aufweist.

Mit einer derartigen Abscherschraube wird die Aufgabe in zufriedenstellender Weise gelöst. Insbesondere paßt sich die Abscherschraube automatisch den jeweiligen Gegebenheiten, nämlich der Länge des verfügbaren Innengewindes in dem Werkstück an, in welches die Abscherschraube hineingeschraubt wird.

Wenn die erfindungsgemäße Abscherschraube nämlich in ein entsprechendes Werkstück hineingeschraubt wird, um dabei z.B. einen Leiter in einem Schraubverbinder festzuklemmen, so läßt sich die Abscherschraube soweit hineindrehen, bis ihre Basis gegen den Leiter zur Anlage kommt. Die Abscherschraube wird dann weiter angezogen, bis das durch die Sollbruchstelle vorgegebene maximale Drehmoment überschritten wird. Wenn dieser Zeitpunkt erreicht ist, wird der obere Teil der Abscherschraube mit dem Kopf abgeschert und läßt sich aus dem Werkstück herausnehmen.

Diejenigen Scheiben, die sich im Bereich des Innengewindes des Schraubverbinders befinden, bleiben naturgemäß in diesem Innengewinde durch den Gewindeeingriff festgeklemmt, während die darüber befindlichen Scheiben außerhalb des Schraubverbinders lose aufliegen und zusammen mit dem abgerissenen Teil des Schaftes und dem Kopf weggenommen werden können.

Im ungünstigsten Falle ergibt sich damit außerhalb des Schraubverbinders ein Überstand mit der Höhe einer einzigen Scheibe. Mit der Einstellung der Dicke bzw. der Höhe der jeweiligen Scheiben kann somit eine relativ feine Regulierung erfolgen, so daß jeweils nur ein geringfügiger Überstand über dem Schraubverbinder auftreten kann.

In Weiterbildung der erfindungsgemäßen Abscherschraube ist vorgesehen, daß die Basis und die darauf liegenden Scheiben jeweils paarweise komplementäre Vorsprünge und Ausnehmungen aufweisen, mit denen sie gegen radiale Verlagerungen, z.B. bei auftretenden Querkräften, gesichert sind. Diese Maßnahmen tragen dazu bei, daß die Scheiben zusammen mit der Basis einen möglichst homogenen Gewindekörper bilden, der in einer sehr kompakten Form in dem Innengewinde des Schraubverbinders verbleibt, wenn die Abscherschraube abgerissen wird, und der für einen dauerhaften Klemmeffekt sorgt.

Bei einer speziellen Bauform der erfindungsgemäßen Abscherschraube ist die Basis mit einer balligen Schraubenkuppe ausgebildet. Derartige Bauformen sind besonders geeignet, wenn elektrische Leiter in Schraubverbindern festgeklemmt werden, um die jeweils festzuklemmenden Leiter nicht in unerwünschter Weise zu beschädigen.

Bei der erfindungsgemäßen Abscherschraube ist die Sollbruchstelle zweckmäßigerweise in Form eines radialen Einstichs, insbesondere als umlaufende Ringnut in dem Schaft ausgebildet. Auf diese Weise läßt sich das vorgegebene maximale Anzugsdrehmoment für eine derartige Abscherschraube sehr genau einstellen.

Besonders vorteilhaft ist es, wenn bei der erfindungsgemäßen Abscherschraube die Sollbruchstelle des Schaftes auf der Höhe der untersten Scheibe eingearbeitet ist. Damit wird in wirkungsvoller Weise dafür gesorgt, daß unabhängig von der verfügbaren Länge des Innengewindes des entsprechenden Schraubverbinders nur ein minimaler Überstand von der Abscherschraube bzw. deren Schaft verbleibt, wenn ihr Kopf nach dem Anziehen der Abscherschraube abgerissen ist.

Bei einer speziellen Bauform der erfindungsgemäßen Abscherschraube ist die Basis mit einer Auflagerfläche versehen, welche die jeweiligen Scheiben trägt. Auf diese Weise wird für eine geeignete Abstützung und Positionierung der Scheiben gesorgt.

In Weiterbildung der erfindungsgemäßen Abscherschraube ist vorgesehen, daß der Kopf der Abscherschraube eine ringförmige Druckfläche aufweist, die gegen die Oberseite der obersten Scheibe anliegt. Mit dieser Maßnahme wird in wirkungsvoller Weise dafür gesorgt, daß die Scheiben zuverlässig und kompakt eingespannt sind.

In Weiterbildung der erfindungsgemäßen Abscherschraube ist vorgesehen, daß die Abscherschraube eine Schraubverbindung, eine Preßpassung oder eine Klebverbindung aufweist, mit der die Scheiben zwischen dem Kopf und der Basis eingespannt sind. Diese Verbindung kann in Abhängigkeit von den jeweiligen Gegebenheiten in unterschiedlicher Weise ausgebildet sein.

Bei einer speziellen Ausführungsform der erfindungsgemäßen Abscherschraube ist vorgesehen, daß der Schaft an seinem unteren Ende ein Außengewinde aufweist und in ein komplementäres Innengewinde in einer separaten Basis eingeschraubt ist.

Bei einer anderen speziellen Ausführungsform der erfindungsgemäßen Abscherschraube ist vorgesehen, daß der Schaft einstückig mit der Basis ausgebildet ist und daß der Kopf eine Mutter aufweist, die auf ein Außengewinde am oberen Ende des Schaftes aufgeschraubt ist.

Bei einer weiteren speziellen Ausführungsform der erfindungsgemäßen Abscherschraube ist vorgesehen, daß der Schaft an seinem unteren Ende einen Vorsprung aufweist, der formschlüssig und/oder kraftschlüssig und/oder stoffschlüssig in einer komplementären Aussparung in der Basis aufgenommen und befestigt ist.

Bei noch einer anderen speziellen Ausführungsform der erfindungsgemäßen Abscherschraube ist vorgesehen, daß der Schaft einstückig mit der Basis ausgebildet ist und daß auf das obere Ende des Schaftes ein Klemmteil mit komplementärer Innenausnehmung aufgesetzt ist, welches mit dem Schaft formschlüssig und/oder kraftschlüssig und/oder stoffschlüssig verbunden ist.

Bei sämtlichen Ausführungsformen wird in zuverlässiger Weise für das Einspannen der Scheiben zwischen der Basis und dem Kopf gesorgt.

Weiterhin wird gemäß der Erfindung ein Verfahren zum Herstellen von einer derartigen Abscherschraube angegeben.

Das erfindungsgemäße Verfahren zum Herstellen einer Abscherschraube, mit einem zylindrischen Körper, der an seiner Außenseite ein Gewinde besitzt, und mit einem zentralen Schaft, der an seinem einen Ende einen Kopf mit Angriffsflächen für ein Antriebswerkzeug aufweist, wobei mindestens eine Scheibe auf den Schaft aufgesteckt ist und die Abscherschraube eine Sollbruchstelle im inneren Bereich der Abscherschraube aufweist, weist folgende Schritte auf:
- Bereitstellen eines Schaftes, der einen zylindrischen Bereich besitzt;
- Einstechen einer einzigen Sollbruchstelle in dem zylindrischen Bereich;
- Aufstecken einer Anzahl von Scheiben auf den zylindrischen Bereich;
- Einspannen der Scheiben zwischen einer Basis und dem Kopf der Abscherschraube; und
- Einarbeiten eines durchgehenden Gewindes auf der Außenseite des von der Basis und den Scheiben gebildeten zylindrischen Körpers.

Bei einer speziellen Ausführungsform des erfindungsgemäßen Verfahrens weist das Verfahren folgende Schritte auf:
- Bereitstellen eines zylinderförmigen Schaftes, der an seinem einen Ende Angriffsflächen für ein Antriebswerkzeug, an seinem anderen Ende ein Außengewinde und dazwischen die Sollbruchstelle aufweist;
- Bereitstellen einer zylinderförmigen Basis mit einem komplementären Innengewinde für das Außengewinde des Schaftes; und
- Zusammenschrauben der Basis und des Schaftes zum Einspannen der Scheiben zwischen ihnen.

Bei einer anderen speziellen Ausführungsform des erfindungsgemäßen Verfahrens weist das Verfahren folgende Schritte auf:
- Bereitstellen eines zylinderförmigen Schaftes, der an seinem einen Ende eine radial verbreiterte Basis und an seinem anderen Ende ein Außengewinde und dazwischen die Sollbruchstelle aufweist; und
- Aufschrauben einer Mutter auf das Außengewinde des Schaftes zum Einspannen der Scheiben zwischen der Mutter und der Basis.

Bei dieser Ausführungsform kann insbesondere eine Mutter verwendet werden, die an ihrer Außenseite Angriffsflächen für ein Antriebswerkzeug aufweist.

Bei einer anderen speziellen Ausführungsform des erfindungsgemäßen Verfahrens weist das Verfahren folgende Schritte auf:
- Bereitstellen eines zylinderförmigen Schaftes, der an seinem einen Ende Angriffsflächen für ein Antriebswerkzeug, an seinem anderen Ende einen axial vorstehenden Vorsprung und dazwischen die Sollbruchstelle aufweist;
- Bereitstellen einer zylinderförmigen Basis mit einer komplementären Aussparung für den axial vorstehenden Vorsprung des Schaftes; und
- Zusammenpressen der Basis und des Schaftes, gegebenenfalls unter Verwendung eines Klebers an der Grenzfläche zwischen ihnen, zum Einspannen der Scheiben zwischen der Basis und dem Schaft.

Bei noch einer anderen speziellen Ausführungsform des erfindungsgemäßen Verfahrens weist dieses folgende Schritte auf:
- Bereitstellen eines zylinderförmigen Schaftes, der an seinem einen Ende eine radial verbreiterte Basis und an seinem anderen Ende einen langgestreckten Bereich und dazwischen die Sollbruchstelle aufweist; und
- Aufpressen eines Klemmteiles mit komplementärer Innenausnehmung zur Außenkontur des oberen Endes des Schaftes, gegebenenfalls unter Verwendung eines Klebers an der Grenzfläche zwischen ihnen, zum Einspannen der Scheiben zwischen ihnen.

Die Erfindung wird nachstehend anhand der Beschreibung von Ausführungsbeispielen und unter Bezugnahme auf die beiliegenden Zeichnungen näher erläutert. Die Zeichnungen zeigen in
- Fig. 1: eine schematische Seitenansicht, teilweise im Längsschnitt, zur Erläuterung einer ersten Ausführungsform der erfindungsgemäßen Abscherschraube;
- Fig. 2: eine schematische Seitenansicht, teilweise im Längsschnitt, zur Erläuterung einer zweiten Ausführungsform der Abscherschraube;
- Fig. 3: eine Seitenansicht, teilweise im Längsschnitt, zur Erläuterung einer dritten Ausführungsform der Abscherschraube;
- Fig. 4: eine Seitenansicht, teilweise im Längsschnitt, einer vierten Ausführungsform der Abscherschraube;
- Fig. 5: eine perspektivische Seitenansicht der dritten Ausführungsform der Abscherschraube;
- Fig. 6: eine Seitenansicht eines Schaftes für die Abscherschraube gemäß der dritten Ausführungsform;

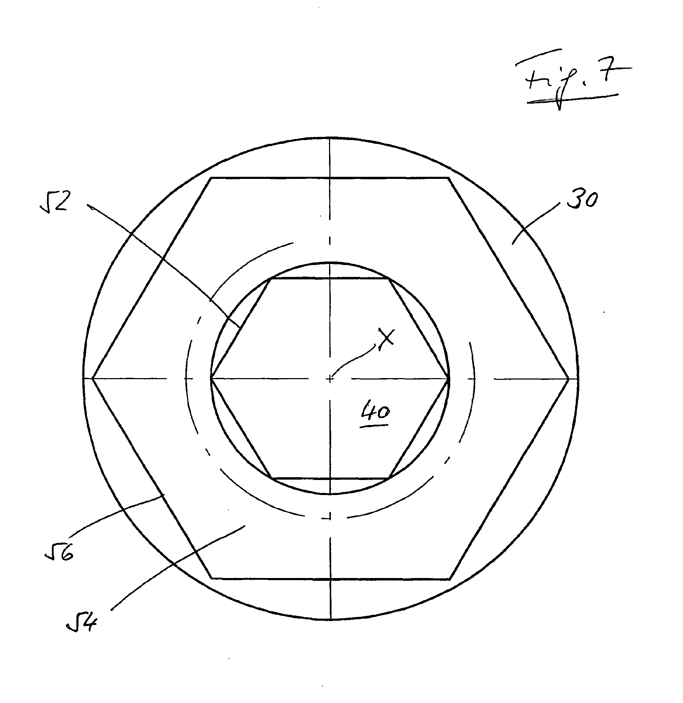

- Fig. 7: eine Draufsicht auf die Abscherschraube gemäß der dritten Ausführungsform von oben;
- Fig. 8: eine perspektivische Seitenansicht der Abscherschraube gemäß der ersten und der zweiten Ausführungsform;
- Fig. 9: eine Seitenansicht im Schnitt der Basis für die erfindungsgemäße Abscherschraube gemäß der ersten Ausführungsform;
- Fig. 10: eine perspektivische Seitenansicht zur Erläuterung einer Scheibe für die erfindungsgemäße Abscherschraube;
- Fig. 11: eine Seitenansicht im Längsschnitt einer Scheibe für die erfindungsgemäße Abscherschraube; und in
- Fig. 12: eine schematische Seitenansicht eines Schaftes für die erfindungsgemäße Abscherschraube gemäß der ersten Ausführungsform.

### Erste Ausführungsform

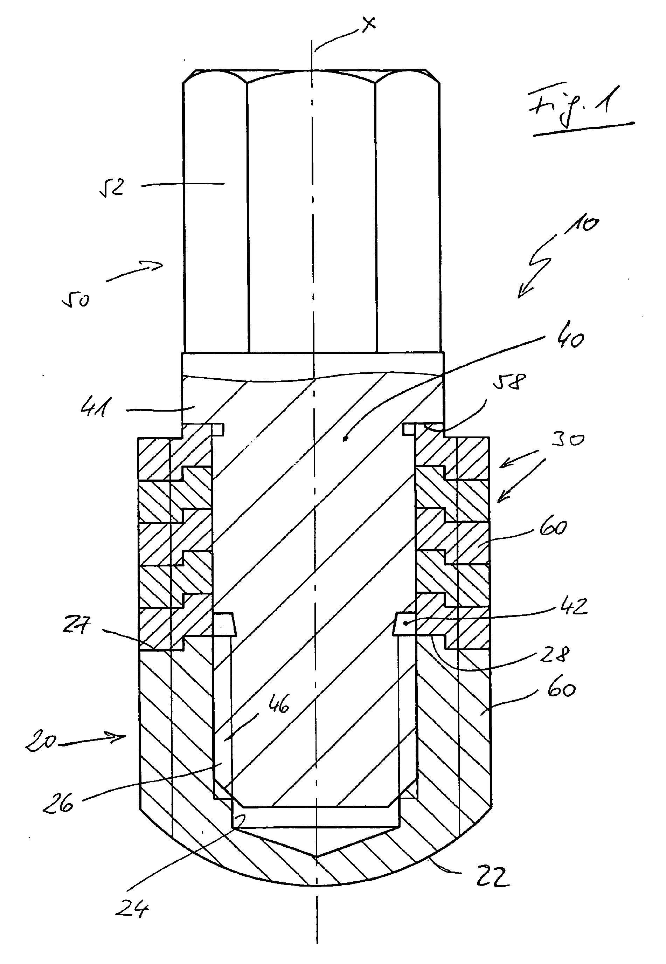

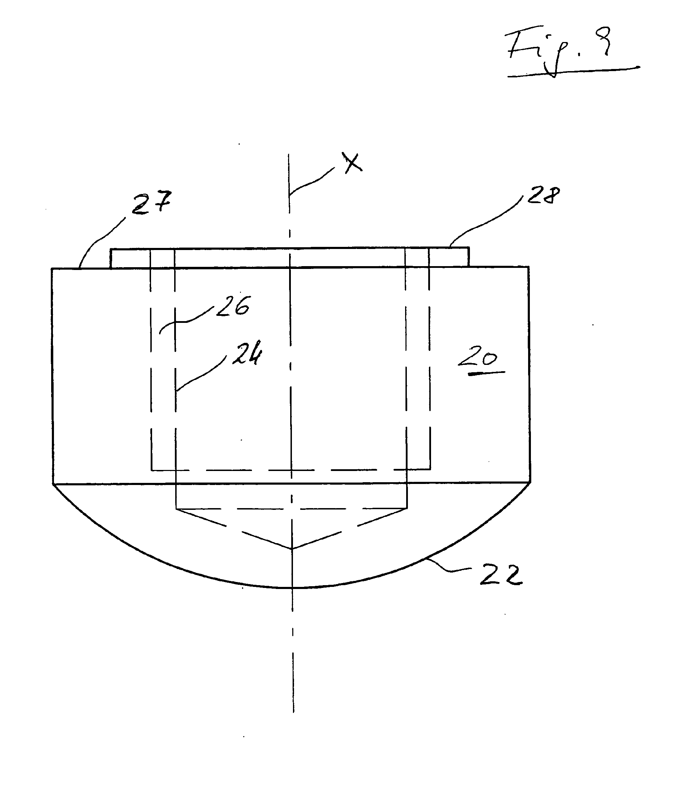

Im folgenden wird zunächst eine erste Ausführungsform der erfindungsgemäßen Abscherschraube unter Bezugnahme auf die Figuren 1 und 8 bis 12 näher erläutert.

Wie aus Fig. 1 ersichtlich, weist eine insgesamt mit 10 bezeichnete Abscherschraube eine Basis 20, einen Schaft 40 und eine Anzahl von Scheiben 30 auf, die zwischen einem mit 50 bezeichneten Kopf und der Basis 20 angeordnet sind. Die Basis 20 weist zu diesem Zweck eine zentrale Aussparung 24 auf, die komplementär zu dem einzusetzenden unteren Ende des Schaftes 40 geformt ist. Insbesondere weist die Basis 20 bei dieser ersten Ausführungsform eine innere Bohrung auf, die mit einem Innengewinde 26 versehen ist.

Die Basis 20 weist an ihrer Oberseite einen Vorsprung 28 auf, der komplementär zu einer entsprechenden Ausnehmung 34 in einer Scheibe 30 ausgebildet ist. Derartige Vorsprünge können in Form von Zapfen oder aber in einfacher Weise als ringförmiger Vorsprung 28 ausgebildet sein, der in eine entsprechende ringförmige Ausnehmung 34 paßt.

Die jeweiligen Scheiben 30 haben eine Durchgangsbohrung 32, durch welche der Schaft 40 mit einem gewissen Spiel hindurchpaßt. Ferner haben die jeweiligen Scheiben an ihrer einen Seite einen Vorsprung 38, der wiederum mit einer entsprechenden Ausnehmung 34 der nächsten Scheibe 30 zusammenpaßt. Auf diese Weise sind die Scheiben 30 aufeinander sowie auf der Basis 20 gegen radiale Verlagerungen gesichert.

Die Dicke bzw. die Höhe der Scheiben 30 sowie deren Anzahl wird in geeigneter Weise gewählt, um der Geometrie der Abscherschrauben 10 und der dazugehörigen Schraubverbinder Rechnung zu tragen. Die Höhe der Scheiben 30 wird in der Praxis im Millimeterbereich liegen.

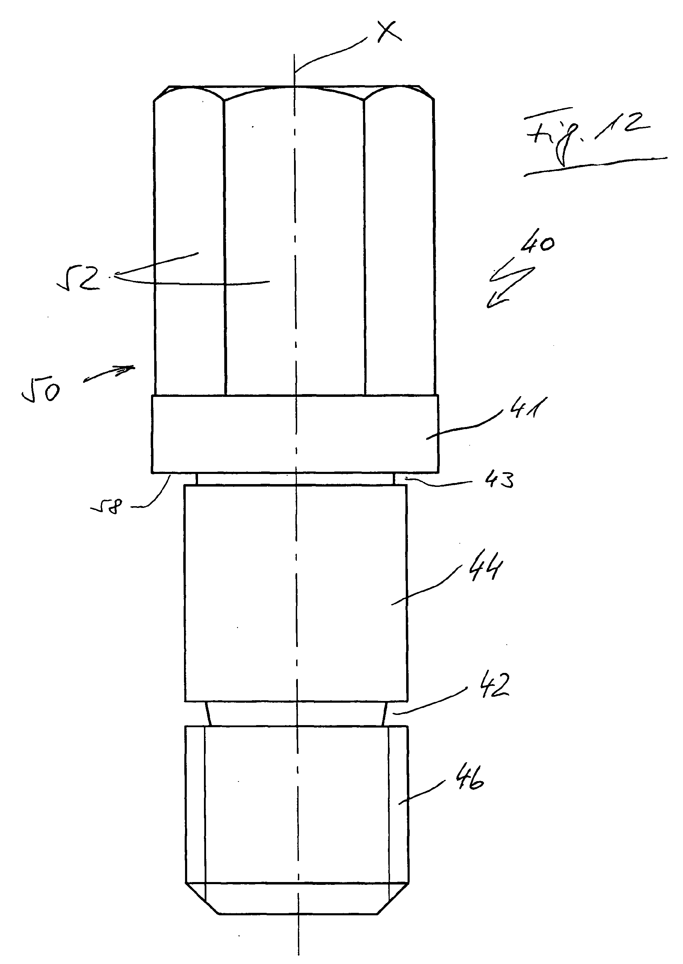

Wie aus Fig. 1 und 12 ersichtlich, weist der Schaft 40 an seinem oberen Ende einen Kopf 50 auf, der Angriffsflächen 52 für ein Antriebswerkzeug besitzt, um die fertige Abscherschraube 10 im Gebrauch anzuziehen.

An der Unterseite des Kopfes 50 ist ein Ringbund 41 vorgesehen, der eine Druckfläche 58 für die jeweils oberste Scheibe 30 bildet.

Der Schaft 40 weist unterhalb des Ringbundes 41 einen zylindrischen Bereich 44 sowie ein unteres Außengewinde 46 auf, wobei diese Bereiche durch eine Ringnut 43 bzw. eine Sollbruchstelle 42 voneinander getrennt sind. Die Ringnut 43 sorgt für den erforderlichen Freiraum für die oberste Scheibe 30, damit diese ordnungsgemäß gegen die Druckfläche 58 anliegen kann. Die Sollbruchstelle 42 ist als Ringnut ausgebildet, die sich bei dem vorliegenden Ausführungsbeispiel in Richtung des unteren Endes des Schaftes 40 verjüngt. Mit der Dimensionierung dieses Einstiches läßt sich die Scherebene vorgeben, an der der Schaft 40 der Abscherschraube 10 abschert, wenn das vorgegebene maximale Drehmoment überschritten wird.

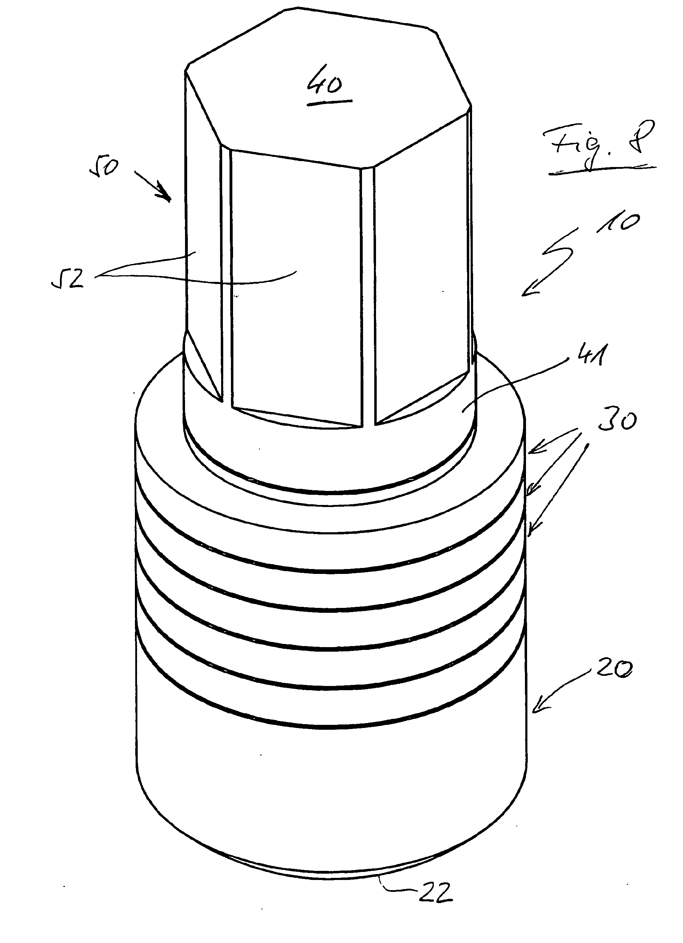

Wie aus Fig. 1 und 8 ersichtlich, sind die Scheiben 30 in einer gewünschten Anzahl vorgesehen und auf den zylinderförmigen Bereich 44 des Schaftes 40 aufgesteckt. Wenn der Schaft 40 mit seinem unteren Außengewinde 46 in das entsprechende Innengewinde 26 der Basis hineingeschraubt ist, so sitzt der Stapel von Scheiben 30 auf der Auflagerfläche 27 der Basis 20 auf und wird zwischen der unteren Auflagerfläche 27 sowie der oberen Druckfläche 58 am Kopf 50 eingeklemmt.

Bei dieser ersten Ausführungsform bildet die Basis 20 somit eine geschlossene Mutter, in welche der Schaft 40 als Innenschraube eingeschraubt ist. Zwischen diesen beiden sind die Scheiben 30 eingespannt. Das schematisch mit 60 bezeichnete Gewinde an der Außenseite erstreckt sich über den gesamten äußeren Bereich der Basis 20 und der Scheiben 30, die in der eingespannten Form einen homogenen Zylinderkörper bilden. Dieses äußere Gewinde 60 wird zweckmäßiger Weise erst dann eingearbeitet, wenn die Vormontage der Abscherschraube 10 aus ihren vorstehend beschriebenen Komponenten erfolgt ist.

### Zweite Ausführungsform

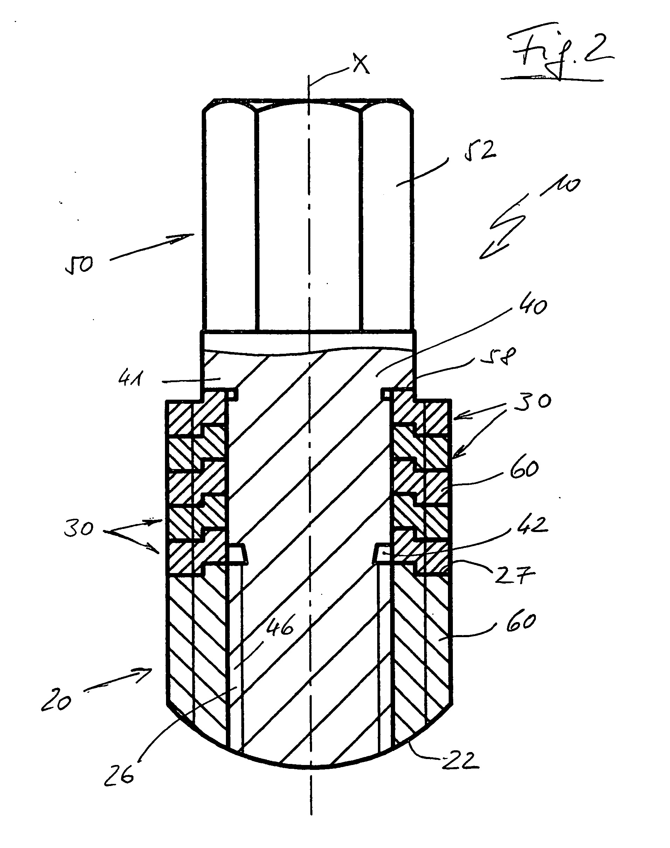

Fig. 2 zeigt eine zweite Ausführungsform der erfindungsgemäßen Abscherschraube, die ähnlich aufgebaut ist wie die erste Ausführungsform gemäß Fig. 1. Der Unterschied zwischen diesen beiden Ausführungsformen besteht darin, daß bei der zweiten Ausführungsform die Basis 20 nicht als unten geschlossene Komponente ausgebildet ist. Vielmehr besitzt die Basis 20 in diesem Falle eine durchgehende Bohrung mit einem durchgehenden Innengewinde 26, in welches der Schaft 40 mit seinem unteren Außengewinde 46 eingeschraubt ist.

Bei dieser zweiten Ausführungsform wird der Schaft 40 mit den aufgesteckten Scheiben 30 in die Basis 20 hineingeschraubt, bis die Scheiben 30 fest zwischen der Druckfläche 58 und der Auflagerfläche 27 der Basis 20 eingespannt sind. Anschließend kann dann die Unterseite der Abscherschraube im Bereich der Basis 20 bearbeitet werden, um einen etwaigen Überstand zu beseitigen, die Kontur zu glätten und ihr die gewünschte Querschnittsform zu verleihen. Beispielsweise wird die Abscherschraube 10 mit einer sphärischen Schraubenkuppe 22 versehen. Danach wird dann das durchgehende äußere Gewinde 60 wie bei der ersten Ausführungsform eingearbeitet.

Die übrigen Komponenten dieser Ausführungsform sind die gleichen wie bei der ersten Ausführungsform, so daß eine erneute Beschreibung entbehrlich erscheint.

### Dritte Ausführungsform

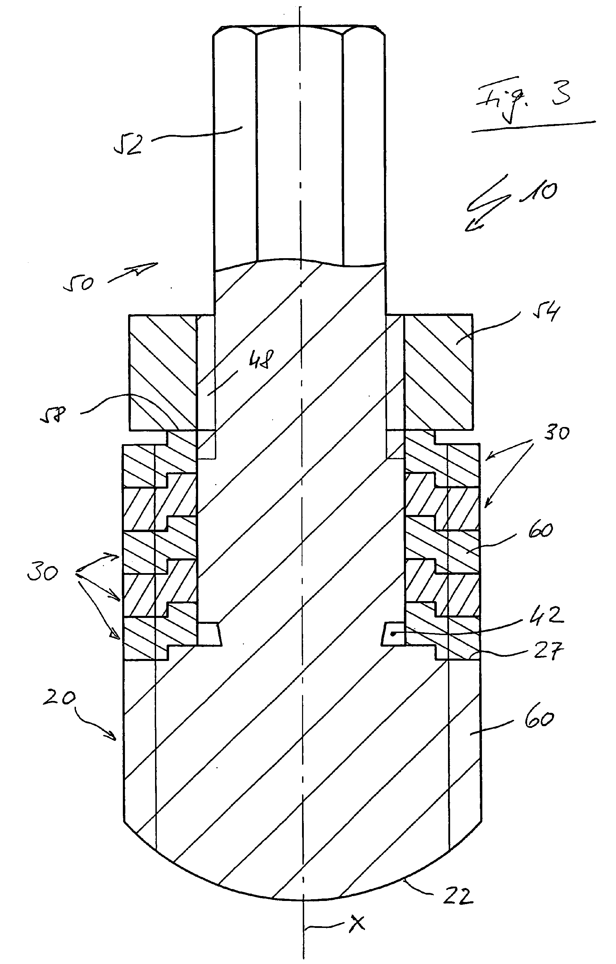

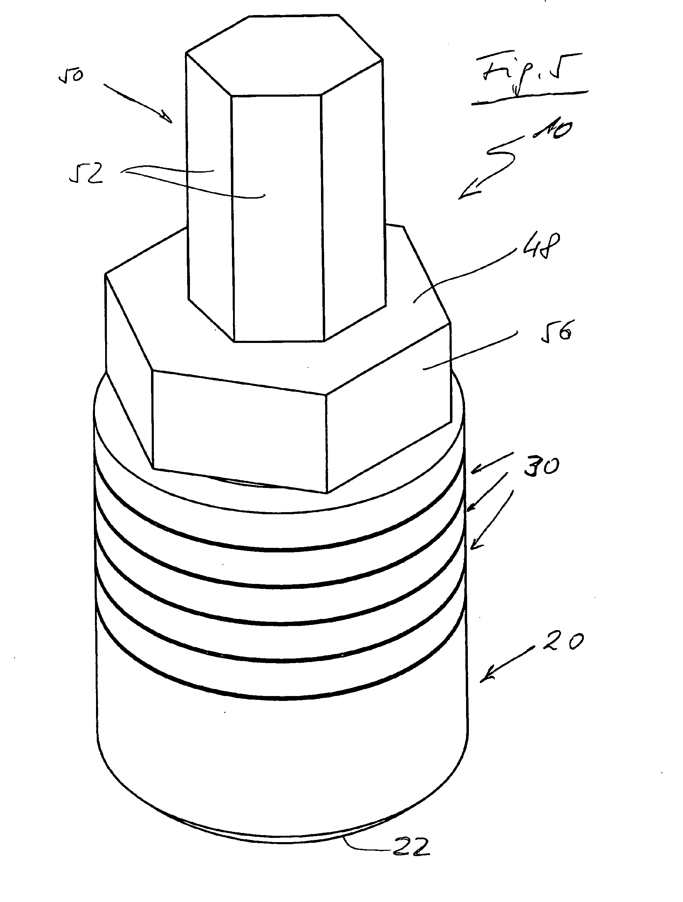

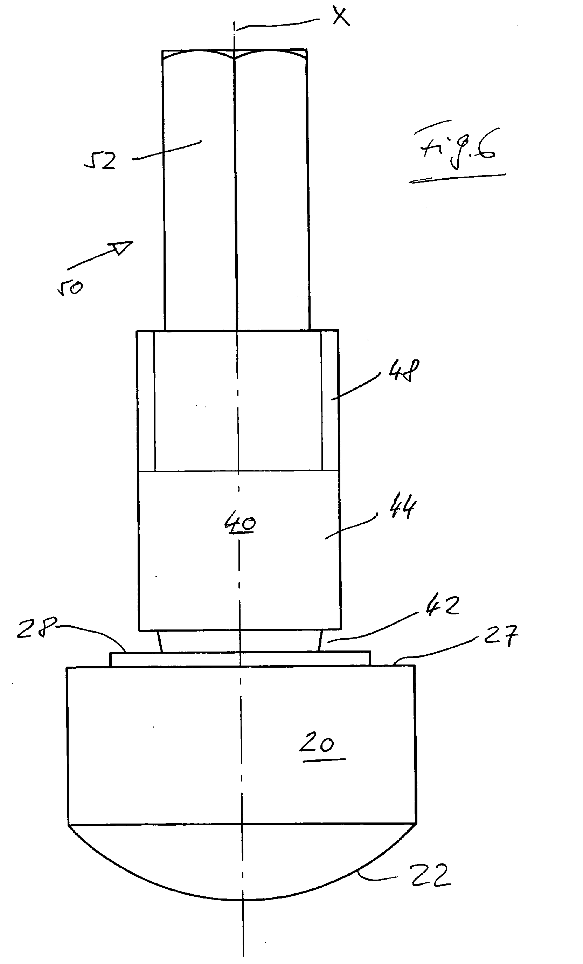

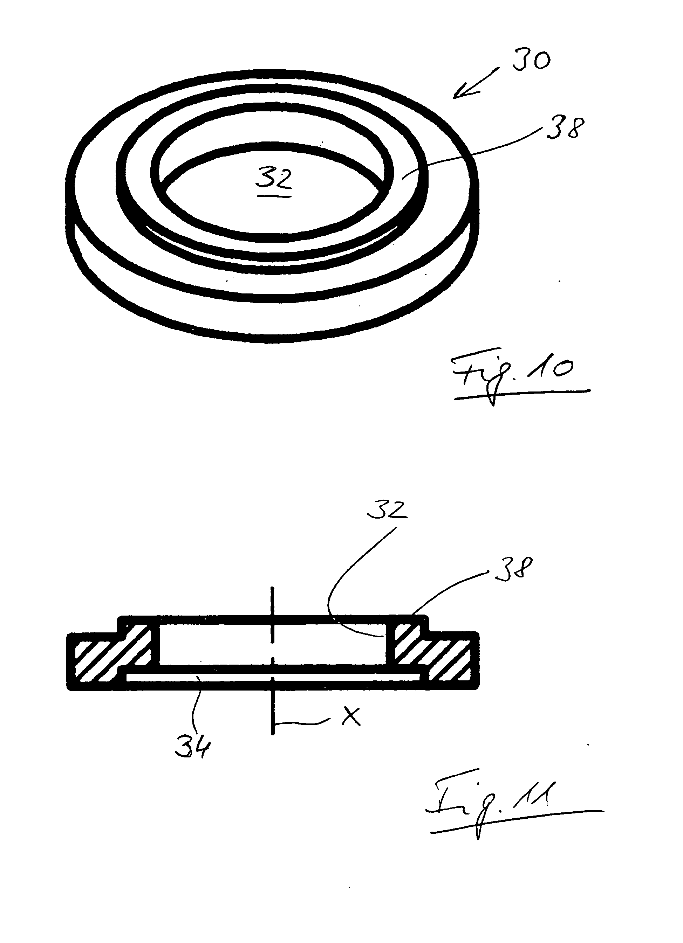

Nachstehend wird eine dritte Ausführungsform der Abscherschraube anhand der Figuren 3, 5 und 6 erläutert. Bei dieser dritten Ausführungsform ist der Schaft 40 einstückig mit der Basis 20 ausgebildet, die ein tellerförmiges Unterteil bildet und an ihrer Oberseite eine Auflagerfläche 27 für die bereits erwähnten Scheiben 30 bildet. Weiterhin ist ein Vorsprung 28 in Fig. 6 schematisch angedeutet, der mit einer entsprechenden Scheibe 30 gemäß Fig. 11 zusammenwirkt.

Der Schaft 40 weist oberhalb der Basis 20 einen zylindrischen Bereich 44 auf, der in seinem oberen Bereich mit einem oberen Außengewinde 48 versehen ist. Ein Kopf 50 ist in üblicher Weise mit Angriffsflächen 52 für ein Antriebswerkzeug versehen, um die fertige Abscherschraube 10 im Gebrauch anzuziehen.

Wie aus Fig. 3 ersichtlich, ist eine separate Mutter 54 vorgesehen, die von der Oberseite des Schaftes 40 auf das obere Außengewinde 48 des Schaftes 40 aufgeschraubt ist.

Bei dieser dritten Ausführungsform spannt somit die Mutter 54 mit einer Druckfläche 58 an ihrer Unterseite den Stapel von Scheiben 30 gegen die Auflagerfläche 27 der Basis 20 vor, so daß wiederum von den Scheiben 30 und der Basis 20 ein kompakter zylinderförmiger Körper gebildet wird, der an seiner Außenseite mit einem durchgehenden Gewinde 60 versehen ist.

Bei dieser Ausführungsform hat der Kopf 50 allerdings einen geringeren Querschnitt, so daß die Angriffsfläche für das Werkzeug insgesamt geringer ist. Bei Verwendung eines geeigneten Antriebswerkzeugs ist gleichwohl ein ordnungsgemäßes Festziehen dieser Abscherschraube 10 und ein Abreißen an der Sollbruchstelle 42 gewährleistet, wenn das vorgegebene maximale Drehmoment überschritten wird.

Im übrigen sind die anderen, nicht eigens beschriebenen Komponenten die gleichen wie bei den vorstehend beschriebenen Ausführungsformen.

### Vierte Ausführungsform

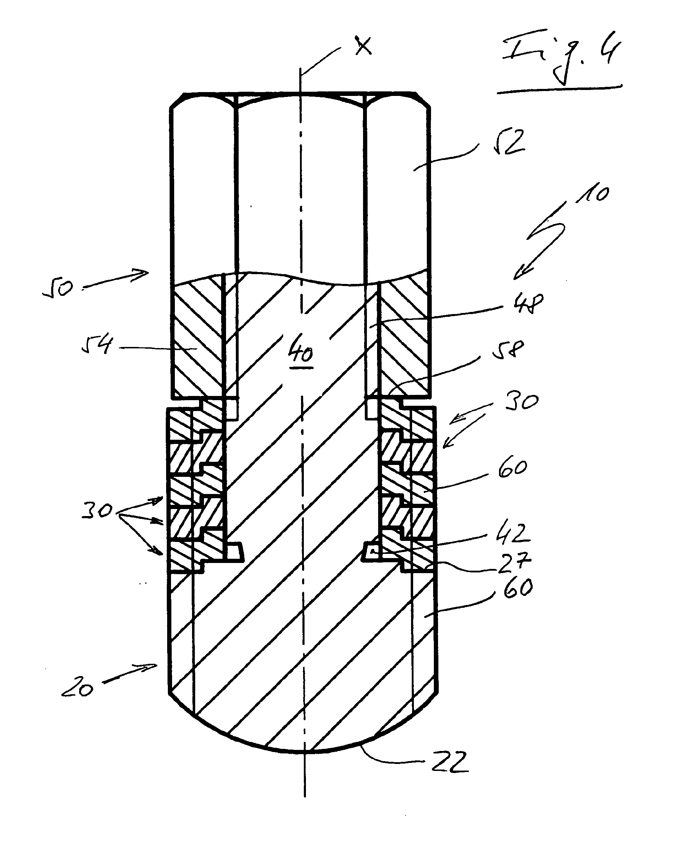

Eine vierte Ausführungsform der Erfindung wird nachstehend unter Bezugnahme auf Fig. 4 näher erläutert. Die vierte Ausführungsform ist ähnlich aufgebaut wie die vorstehend beschriebene dritte Ausführungsform. Auch bei der vierten Ausführungsform wird ein Schaft 40 verwendet, der in seinem unteren Bereich einstückig mit der Basis 20 ausgebildet ist.

Bei der vierten Ausführungsform ist die Anordnung jedoch so getroffen, daß der Schaft in seinem oberen Bereich ein durchgehendes oberes Außengewinde 48 besitzt, auf das eine langgestreckte Mutter 54 aufgeschraubt ist, die zugleich den Kopf 50 der Abscherschraube 10 bildet und mit Angriffsflächen 52 für ein Antriebswerkzeug der Abscherschraube 10 versehen ist. Die äußeren Abmessungen der Mutter 54 können dabei ähnliche Dimensionen haben wie der Kopf bei den Ausführungsformen gemäß Fig. 1 und Fig. 2. Das Innengewinde der Mutter 54 kann als Sacklochgewinde oder als Durchgangsgewinde ausgebildet sein.

Bei der vierten Ausführungsform besitzt die Mutter 54 an ihrer Unterseite eine entsprechende ringförmige Druckfläche 58, welche den Stapel von Scheiben 30 gegen die Auflagerfläche 27 der Basis 20 vorspannt. Die Scheiben 30 selbst sind in gleicher Weise angeordnet wie bei den oben beschriebenen Ausführungsbeispielen.

Die Mutter 54 hat hierbei eine Doppelfunktion, da sie einerseits zum Festspannen des Stapels von Scheiben 30 gegen die Basis 20 dient. Andererseits ist die Mutter 54 als Kopf der Abscherschraube 10 vorgesehen, der beim Anziehen der Abscherschraube 10 im Betrieb an den Angriffsflächen 52 betätigt wird.

### Fünfte Ausführungsform

Die nachstehend beschriebene fünfte Ausführungsform der Erfindung stellt eine Abwandlung der ersten bzw. zweiten Ausführungsform der Erfindung dar, allerdings wird in diesem Falle kein Innengewinde 26 mit komplementären Außengewinde 46 verwendet.

Stattdessen ist bei der fünften Ausführungsform vorgesehen, daß der Schaft 40 an seinem unteren Ende einen Vorsprung aufweist, der in eine komplementäre Aussparung in der Basis 20 eingesetzt wird, wobei die Verbindung mit einer Preßpassung oder einer Klebverbindung erfolgen kann.

Der Vorsprung des Schaftes 40 kann zu diesem Zweck einen kreiszylinderförmigen oder unrunden Querschnitt besitzen, der in eine komplementäre Aussparung in der Basis 20 eingesetzt und dort befestigt wird, so daß keine Relativbewegung in Längsrichtung oder in Drehrichtung möglich ist. Gegebenenfalls wird dabei ein Kleber an den Grenzflächen zwischen Schaft 40 und Basis 20 verwendet, so daß die Verbindung zwischen ihnen formschlüssig und/oder kraftschlüssig und/oder stoffschlüssig erfolgt.

### Sechste Ausführungsform

Die sechste Ausführungsform der Erfindung ähnelt in ihrem Aufbau der dritten und der vierten Ausführungsform der beschriebenen Abscherschraube 10. Allerdings werden weder ein Außengewinde 48 noch eine Mutter 54 verwendet.

Stattdessen ist bei der sechsten Ausführungsform der Abscherschraube vorgesehen, daß der Schaft 40 einstückig mit der Basis 20 ausgebildet ist und daß auf das obere Ende des Schaftes 40 ein ringförmiges Klemmteil aufgesetzt wird, das eine komplementäre Innenausnehmung zur Konfiguration des Schaftes 40 an seinem oberen Ende besitzt.

In diesem Falle wird das Klemmteil, welches die Mutter 54 ersetzt, auf den oberen Bereich des Schaftes 40 mit einer Preßpassung aufgebracht und/oder mit einer Klebverbindung an dem Schaft 40 befestigt.

Im einfachsten Falle ist der Schaft 40 in diesem oberen Bereich zylinderförmig ausgebildet, er kann jedoch auch mit unrundem Querschnitt ausgebildet sein, um das Klemmteil mit seiner komplementären Innenausnehmung aufzunehmen, das seinerseits an der Unterseite eine Druckfläche besitzt, die gegen die oberste Scheibe 30 anliegt.

Eine derartige Bauform ist auch bei einer Ausführungsform möglich, die der Darstellung in Fig. 8 entspricht. In diesem Falle wird der Schaft 40 an seinem oberen Ende einen unrunden Querschnitt, beispielsweise in Form eines Außenkants besitzen, auf den das Klemmteil mit komplementärer Innenausnehmung derart aufgesetzt ist, daß es unverdrehbar gegenüber dem Schaft 40 befestigt ist. Das Klemmteil kann dabei mit einer Durchgangsöffnung oder mit einem Sackloch ausgebildet sein und besitzt, wie bei der Darstellung in Fig. 8, äußere Angriffsflächen für ein Antriebswerkzeug.

Die Verbindung kann in diesem Falle durch eine Preßpassung zwischen dem Klemmteil und dem oberen Ende des Schaftes 40 erfolgen, wobei gegebenenfalls ein Kleber an der Grenzfläche zwischen ihnen vorgesehen ist.

Auch in diesem Falle wird somit dafür gesorgt, daß eine zuverlässige formschlüssige und/oder kraftschlüssige und/oder stoffschlüssige Verbindung zwischen diesen Komponenten gegeben ist, so daß das Klemmteil und der Schaft gegen Relativbewegungen in Längsrichtung und in Drehrichtung gesichert sind.

### Weitere Modifizierungen der Abscherschraube

Bei den vorstehend beschriebenen Ausführungsbeispielen ist die Unterseite der Abscherschraube 10 jeweils mit einer sphärischen Schraubenkuppe 22 dargestellt. Die Abscherschraube 10 ist jedoch nicht auf eine derartige Bauform beschränkt. Vielmehr kann die Vorderseite der Abscherschraube 10 in der jeweils gewünschten Weise ausgebildet sein, beispielsweise mit einem zylinderförmigen Vorderteil oder mit Fräseinrichtungen, wenn dies erforderlich sein sollte.

Wenn bei den vorstehend beschriebenen Ausführungsbeispielen die Angriffsflächen 52 für ein Antriebswerkzeug der Abscherschraube 10 als Außenkant dargestellt sind, so ist die erfindungsgemäße Abscherschraube nicht auf derartige Bauformen beschränkt. Vielmehr kann der Kopf 50 bei einigen Ausführungsformen auch mit einem Innenkant ausgebildet sein, der die entsprechenden Angriffsflächen für ein Antriebswerkzeug besitzt.

Desweiteren darf darauf hingewiesen werden, daß der Schaft 40 auch einen unrunden Querschnitt haben kann, beispielsweise als Mehrkant ausgebildet sein oder einen ovalen oder ellipsenförmigen Querschnitt besitzen kann, um dann die aufgesteckten Scheiben 30 formschlüssig aufzunehmen. Die Scheiben 30 sind in einem solchen Falle selbstverständlich mit einer komplementären Innenausnehmung versehen. Alternativ können der Schaft 40 und die Scheiben 30 auch andere komplementäre Vorsprünge und Ausnehmungen besitzen, um für eine formschlüssige Verbindung zwischen ihnen zu sorgen.

Mit derartigen Bauformen läßt sich eine kompakte Mitnahme der Scheiben 30 auf dem Schaft 40 erzielen, wenn die Abscherschraube 10 in ein entsprechendes Werkstück bzw. einen Schraubverbinder eingeschraubt wird.

Zur Herstellung der erfindungsgemäßen Abscherschrauben 10 wird bei der ersten und der zweiten Ausführungsform folgendermaßen vorgegangen.
- Zunächst wird ein zylinderförmiger Schaft 40 bereitgestellt, der an seinem einen Ende Angriffsflächen 52 für ein Antriebswerkzeug, an seinem anderen Ende ein Außengewinde 46 und dazwischen eine Sollbruchstelle 42 aufweist;
- anschließend wird eine gewünschte Anzahl von Scheiben 30 auf den Schaft 40 aufgesteckt, der dem jeweiligen Einsatzzweck entspricht;
- danach wird eine zylinderförmige Basis 20 mit einem komplementären Innengewinde 26 für das Außengewinde 46 des Schaftes 40 bereitgestellt;
- dann werden die Basis 20 und der Schaft 40 zusammengeschraubt, um den Stapel von Scheiben 30 zwischen ihnen einzuspannen; und
- schließlich wird ein durchgehendes Gewinde 60 an der Außenseite des von der Basis 20 und den Scheiben 30 gebildeten zylindrischen Körpers eingearbeitet, wobei die Abscherschraube mit den jeweiligen Angriffsflächen 52 am Kopf 50 gehalten werden kann.

Bei einer modifizierten Ausführungsform wird zur Herstellung der erfindungsgemäßen Abscherschrauben 10 folgendermaßen vorgegangen.

Es wird ein zylinderförmiger Schaft 40 bereitgestellt, der an seinem einen Ende Angriffsflächen für ein Antriebswerkzeug, an seinem anderen Ende einen axial vorstehenden Vorsprung und dazwischen eine Sollbruchstelle 42 aufweist;
- auf den Schaft 40 wird eine vorgegebene gewünschte Anzahl von Scheiben 30 aufgesteckt;
- dann wird eine zylinderförmige Basis 20 mit einer komplementären Aussparung für den axial vorstehenden Vorsprung bereitgestellt;
- die Basis 20 und der Schaft 40 werden, gegebenenfalls unter Verwendung eines Klebers an der Grenzfläche zwischen ihnen, zum Einspannen der Scheiben 30 zwischen ihnen zusammengepreßt; und
- schließlich wird ein durchgehendes Gewinde 60 auf der Außenseite des von der Basis 20 und den Scheiben 30 gebildeten zylindrischen Körpers eingearbeitet.

Bei der Herstellung der dritten und der vierten Ausführungsform der erfindungsgemäßen Abscherschrauben 10 wird folgendermaßen vorgegangen:
- Zunächst wird ein zylinderförmiger Schaft 40 bereitgestellt, der an seinem einen Ende eine radial verbreiterte Basis 20 und an seinem anderen Ende ein Außengewinde 48 und dazwischen eine Sollbruchstelle 42 aufweist;
- dann wird eine vorgegebene gewünschte Anzahl von Scheiben 30 auf den Schaft 40 aufgesteckt, die dabei auf der Basis 20 aufliegen;
- anschließend wird eine Mutter 54 auf das Außengewinde 48 des Schaftes 40 aufgeschraubt, um den Stapel von Scheiben 30 zwischen der Mutter 54 und der Basis 20 einzuspannen;
- danach wird ein durchgehendes Gewinde 60 an der Außenseite des von der Basis 20 und den Scheiben 30 gebildeten zylindrischen Körpers eingearbeitet.

Bei einer modifizierten Variante eines derartigen Verfahrens zur Herstellung der erfindungsgemäßen Abscherschrauben wird folgendermaßen vorgegangen.
- Zunächst wird ein zylinderförmiger Schaft 40 bereitgestellt, der an seinem einen Ende eine radial verbreiterte Basis 20 und an seinem anderen Ende einen langgestreckten Bereich und dazwischen eine Sollbruchstelle 42 aufweist;
- dann wird eine vorgegebene gewünschte Anzahl von Scheiben 30 auf den Schaft 40 aufgesteckt, die dabei auf der Basis 20 aufliegen;
- anschließend wird ein Klemmteil mit komplementärer Innenausnehmung zur Außenkontur des langgestreckten Bereiches am oberen Ende des Schaftes 40 auf diesen aufgepreßt, gegebenenfalls unter Verwendung eines Klebers an der Grenzfläche zwischen ihnen, um die Scheiben 30 zwischen dem Klemmteil und der Basis einzuspannen;
- schließlich wird ein durchgehendes Gewinde 60 an der Außenseite des von der Basis 20 und den Scheiben 30 gebildeten zylindrischen Körpers eingearbeitet.

Die erfindungsgemäßen Abscherschrauben 10 können aus beliebigen geeigneten Materialien hergestellt werden, wie z.B. Aluminium, Messing oder Stahlguß (St). Auch sind verschiedene Beschichtungen der Abscherschraube möglich, wie z.B. galvanische Beschichtungen, Beschichtungen durch Tauchen oder durch Aufsprühen.

Beispielsweise kann durch das Aufbringen einer Beschichtung mit einem geeigneten Gleitmittel die Streuung der Gewindereibung zwischen dem Schaft und der Mutter bzw. zwischen den Scheiben und der Mutter bzw. zwischen den Scheiben und dem Schaft verringert werden. Mit diesen Maßnahmen kann erreicht werden, daß das am Kopf der Abscherschraube aufgebrachte Torsionsdrehmoment beim Abscheren eine geringe Streuung aufweist und insgesamt ein niedrigeres Anzugsmoment für die gewünschte Kontaktkraft benötigt wird.

### Bezugszeichenliste

- 10: Abscherschraube
- 20: Basis
- 22: Schraubenkuppe
- 24: Aussparung
- 26: Innengewinde
- 27: Auflagerfläche
- 28: Vorsprung
- 30: Scheibe
- 32: Durchgangsbohrung
- 34: Ausnehmung
- 38: Vorsprung
- 40: Schaft
- 41: Ringbund
- 42: Sollbruchstelle
- 43: Ringnut
- 44: zylindrischer Bereich
- 46: unteres Außengewinde
- 48: oberes Außengewinde
- 50: Kopf
- 52: Angriffsflächen
- 54: Mutter
- 56: Außenkant
- 58: Druckfläche
- 60: Gewinde

## Patentansprüche

1. Abscherschraube, mit einem zylindrischen Körper, der an seiner Außenseite ein Gewinde (60) besitzt, und mit einem zentralen Schaft (40), der an seinem einen Ende einen Kopf (50) besitzt, der Angriffsflächen (52) für ein Antriebswerkzeug aufweist, wobei auf den Schaft (40) mindestens eine Scheibe (30) aufgesteckt ist und wobei die Abscherschraube (10) eine Sollbruchstelle aufweist, die eine Scherebene bildet,
**dadurch gekennzeichnet,**
**daß** der Schaft (40) im inneren Bereich der Abscherschraube einen zylindrischen Bereich (44) besitzt, auf den die mindestens eine Scheibe (30) aufgesteckt ist,
**daß** die jeweiligen Scheiben (30) zwischen einer Basis (20) und dem Kopf (50) der Abscherschraube eingespannt sind
und **daß** der Schaft (40) eine einzige Sollbruchstelle (42) im inneren Bereich der Abscherschraube aufweist.

2. Abscherschraube nach Anspruch 1,
**dadurch gekennzeichnet,**
**daß** die Basis (20) und die daraufliegenden Scheiben (30) jeweils paarweise komplementäre Vorsprünge (28, 38) und Ausnehmungen (34) aufweisen, mit denen sie gegen radiale Verlagerungen gesichert sind.

3. Abscherschraube nach Anspruch 1 oder 2,
**dadurch gekennzeichnet,**
**daß** die Basis (20) mit einer balligen Schraubenkuppe (22) ausgebildet ist.

4. Abscherschraube nach einem der Ansprüche 1 bis 3,
**dadurch gekennzeichnet,**
**daß** die Sollbruchstelle (42) in Form eines radialen Einstichs, insbesondere als umlaufende Ringnut in dem Schaft (40) ausgebildet ist.

5. Abscherschraube nach einem der Ansprüche 1 bis 4,
**dadurch gekennzeichnet,**
**daß** die Sollbruchstelle (42) auf der Höhe der untersten Scheibe (30) eingearbeitet ist.

6. Abscherschraube nach einem der Ansprüche 1 bis 5,
**dadurch gekennzeichnet,**
**daß** die Basis (20) eine Auflagerfläche (27) aufweist, die die jeweiligen Scheiben (30) trägt.

7. Abscherschraube nach einem der Ansprüche 1 bis 6,
**dadurch gekennzeichnet,**
**daß** der Kopf (50) der Abscherschraube (10) eine ringförmige Druckfläche (58) aufweist, die gegen die Oberseite der obersten Scheibe (30) anliegt.

8. Abscherschraube nach einem der Ansprüche 1 bis 7,
**dadurch gekennzeichnet,**
**daß** die Abscherschraube eine Schraubverbindung, eine Preßpassung oder eine Klebverbindung aufweist, mit der die Scheiben (30) zwischen dem Kopf (50) und der Basis (20) eingespannt sind.

9. Abscherschraube nach einem der Ansprüche 1 bis 8,
**dadurch gekennzeichnet,**
**daß** der Schaft (40) an seinem unteren Ende ein Außengewinde (46) aufweist und in ein komplementäres Innengewinde (26) in einer separaten Basis (20) eingeschraubt ist.

10. Abscherschraube nach einem der Ansprüche 1 bis 8,
**dadurch gekennzeichnet,**
**daß** der Schaft (40) einstückig mit der Basis (20) ausgebildet ist
und **daß** der Kopf (50) eine Mutter (54) aufweist; die auf ein Außengewinde (48) am oberen Ende des Schaftes (40) aufgeschraubt ist.

11. Abscherschraube nach einem der Ansprüche 1 bis 8,
**dadurch gekennzeichnet,**
**daß** der Schaft (40) an seinem unteren Ende einen Vorsprung aufweist, der formschlüssig und/oder kraftschlüssig und/oder stoffschlüssig in einer komplementären Aussparung in der Basis (20) aufgenommen und befestigt ist.

12. Abscherschraube nach einem der Ansprüche 1 bis 8,
**dadurch gekennzeichnet,**
**daß** der Schaft (40) einstückig mit der Basis (20) ausgebildet ist
und **daß** auf das obere Ende des Schaftes (40) ein Klemmteil mit komplementärer Innenausnehmung aufgesetzt ist, welches mit dem Schaft (40) formschlüssig und/oder kraftschlüssig und/oder stoffschlüssig verbunden ist.

13. Verfahren zum Herstellen einer Abscherschraube (10) mit einem zylindrischen Körper, der an seiner Außenseite ein Gewinde (60) besitzt, und mit einem zentralen Schaft (40), der an seinem einen Ende einen Kopf (50) mit Angriffsflächen (52) für ein Antriebswerkzeug aufweist, wobei mindestens eine Scheibe (30) auf den Schaft (40) aufgesteckt ist und die Abscherschraube (10) eine Sollbruchstelle (42) im inneren Bereich der Abscherschraube (10) aufweist, wobei das Verfahren folgende Schritte aufweist:
- Bereitstellen eines Schaftes (40), der einen zylindrischen Bereich (44) besitzt,
- Einstechen einer einzigen Sollbruchstelle (42) in dem zylindrischen Bereich,
- Aufstecken einer Anzahl von Scheiben (30) auf den zylindrischen Bereich,
- Einspannen der Scheiben (30) zwischen einer Basis (20) und dem Kopf (50) der Abscherschraube, und
- Einarbeiten eines durchgehenden Gewindes (60) auf der Außenseite des von der Basis (20) und den Scheiben (30) gebildeten zylindrischen Körpers.

14. Verfahren nach Anspruch 13,
das ferner folgende Schritte aufweist:
- Bereitstellen eines zylinderförmigen Schaftes (40), der an seinem einen Ende Angriffsflächen für ein Antriebswerkzeug, an seinem anderen Ende ein Außengewinde (46) und dazwischen die Sollbruchstelle (42) aufweist;
- Bereitstellen einer zylinderförmigen Basis (20) mit einem komplementären Innengewinde (26) für das Außengewinde (46) des Schaftes (40); und
- Zusammenschrauben der Basis (20) und des Schaftes (40) zum Einspannen der Scheiben (30) zwischen ihnen.

15. Verfahren nach Anspruch 13, das ferner folgende Schritte aufweist:
- Bereitstellen eines zylinderförmigen Schaftes (40), der an seinem einen Ende eine radial verbreiterte Basis (20) und an seinem anderen Ende ein Außengewinde (48) und dazwischen die Sollbruchstelle (42) aufweist; und
- Aufschrauben einer Mutter (54) auf das Außengewinde (48) des Schaftes (40) zum Einspannen der Scheiben (30) zwischen der Mutter (54) und der Basis (20).

16. Verfahren nach Anspruch 15,
**dadurch gekennzeichnet,**
**daß** eine Mutter (54) verwendet wird, die an ihrer Außenseite Angriffsflächen (52) für ein Antriebswerkzeug aufweist.

17. Verfahren nach Anspruch 13, das ferner folgende Schritte aufweist:
- Bereitstellen eines zylinderförmigen Schaftes (40), der an seinem einen Ende Angriffsflächen für ein Antriebswerkzeug, an seinem anderen Ende einen axial vorstehenden Vorsprung und dazwischen die Sollbruchstelle (42) aufweist;
- Bereitstellen einer zylinderförmigen Basis (20) mit einer komplementären Aussparung für den axial vorstehenden Vorsprung des Schaftes (40); und
- Zusammenpressen der Basis (20) und des Schaftes (40), gegebenenfalls unter Verwendung eines Klebers an der Grenzfläche zwischen ihnen, zum Einspannen der Scheiben (30) zwischen der Basis (20) und dem Schaft (40).

18. Verfahren nach Anspruch 13, das ferner folgende Schritte aufweist:
- Bereitstellen eines zylinderförmigen Schaftes (40), der an seinem einen Ende eine radial verbreiterte Basis (20) und an seinem anderen Ende einen langgestreckten Bereich und dazwischen die Sollbruchstelle (42) aufweist; und
- Aufpressen eines Klemmteiles mit komplementärer Innenausnehmung zur Außenkontur des oberen Endes des Schaftes (40), gegebenenfalls unter Verwendung eines Klebers an der Grenzfläche zwischen ihnen, zum Einspannen der Scheiben (30) zwischen ihnen.

## Claims

1. A shear screw, having a cylindrical body, which has a thread (60) on its outer side, and having a central shank (40) which at its one end has a head (50) having application faces (52) for a driving tool, there being at least one disk (30) mounted on the shank (40) and the shear screw (10) having a predetermined breaking location which forms a shear plane,
**characterized in that**
the shank (40) has, in the inner region of the shear screw, a cylindrical region (44) on which the at least one disk (30) is mounted,
the disks (30) in question are clamped between a base (20) and the head (50) of the shear screw,
and the shank (40) has a single predetermined breaking location (42) in the inner region of the shear screw.

2. The shear screw according to claim 1,
**characterized in that** the base (20) and the disks (30) lying thereon have respective pairs of complementary projections (28, 38) and recesses (34) by means of which they are secured against radial displacements.

3. The shear screw according to claim 1 or 2,
**characterized in that** the base (20) is provided with a convex screw-end (22).

4. The shear screw according to any one of claims 1 to 3,
**characterized in that** the predetermined breaking location (42) is in the form of a radial indentation, especially in the form of a circumferential annular groove in the shank (40).

5. The shear screw according to any one of claims 1 to 4,
**characterized in that** the predetermined breaking location (42) is worked-in at the level of the lowermost disk (30).

6. The shear screw according to any one of claims 1 to 5,
**characterized in that** the base (20) has a bearing face (27) which carries the respective disks (30).

7. The shear screw according to any one of claims 1 to 6,
**characterized in that** the head (50) of the shear screw (10) has an annular pressure face (58) which rests against the upper side of the uppermost disk (30).

8. The shear screw according to any one of claims 1 to 7,
**characterized in that** the shear screw has a screw connection, a press-fit or an adhesive connection by means of which the disks (30) are clamped between the head (50) and the base (20).

9. The shear screw according to any one of claims 1 to 8,
**characterized in that** the shank (40) has an external thread (46) at its lower end and is screwed into a complementary internal thread (26) in a separate base (20).

10. The shear screw according to any one of claims 1 to 8,
**characterized in that** the shank (40) is formed in one piece with the base (20) and the head (50) has a nut (54) which has been screwed onto an external thread (48) at the upper end of the shank (40).

11. The shear screw according to any one of claims 1 to 8,
**characterized in that** the shank (40) has, at its lower end, a projection which is received and fixed in a complementary cavity in the base (20) by means of an form-fitting connection and/or a force-fitting connection and/or a material-fitting connection.

12. The shear screw according to any one of claims 1 to 8,
**characterized in that** the shank (40) is formed in one piece with the base (20), and **in that** on the upper end of the shank (40) there is mounted a clamping member having a complementary internal recess, which member is joined to the shank (40) by means of a form-fitting connection and/or a force-fitting connection and/or a material-fitting connection.

13. A method of producing a shear screw (10) having a cylindrical body, which has a thread (60) on its outer side, and having a central shank (40) which has at its one end a head (50) having application faces (52) for a driving tool, at least one disk (30) being mounted on the shank (40) and the shear screw (10) having a predetermined breaking location (42) in the inner region of the shear screw (10), the method comprising the following steps:
- providing a shank (40) which has a cylindrical region (44);
- introducing a single predetermined breaking location (42) in the cylindrical region;
- mounting a number of disks (30) on the cylindrical region;
- clamping the disks (30) between a base (20) and the head (50) of the shear screw; and
- creating a continuous thread (60) on the outer side of the cylindrical body formed by the base (20) and the disks (30).

14. The method according to claim 13,
further comprising the following steps:
- providing a cylindrical shank (40) which has at its one end application faces for a driving tool, at its other end an external thread (46) and between them the predetermined breaking location (42);
- providing a cylindrical base (20) having a complementary internal thread (26) for the external thread (46) of the shank (40); and
- screwing the base (20) and the shank (40) together to clamp the disks (30) between them.

15. The method according to claim 13, further comprising the following steps:
- providing a cylindrical shank (40) which has at its one end a radially widened base (20) and at its other end an external thread (48) and between them the predetermined breaking location (42); and
- screwing a nut (54) onto the external thread (48) of the shank (40) to clamp the stack of disks (30) between the nut (54) and the base (20).

16. The method according to claim 15,
**characterised in that** a nut (54) is used which has application faces (52) for a driving tool on its outer side.

17. The method according to claim 13, further comprising the following steps:
- providing a cylindrical shank (40) which has at its one end application faces for a driving tool, at its other end an axially projecting projection and between them the predetermined breaking location (42);
- providing a cylindrical base (20) having a complementary cavity for the axially projecting projection of the shank (40); and
- pressing the base (20) and shank (40) together, optionally using an adhesive at the interface between them, to clamp the disks (30) between the base (20) and the shank (40).

18. The method according to claim 13, further comprising the following steps:
- providing a cylindrical shank (40) which has at its one end a radially widened base (20) and at its other end an elongated region and between them a predetermined breaking location (42); and
- pressing-on a clamping member having an internal recess complementary to the outer contour of the upper end of the shank (40), optionally using an adhesive at the interface between them, to clamp the disks (30) between them.

## Revendications

1. Vis de cisaillement avec un corps cylindrique, dont la face extérieure est munie d'un filetage (60), et avec une tige centrale (40), dont une extrémité possède une tête (50), qui est munie de surfaces de prise (52) pour un outil d'actionnement, au moins une rondelle (30) étant montée sur la tige (40), et la vis de cisaillement (10) présentant une zone destinée à la rupture, qui forme un plan de cisaillement,
**caractérisée en ce que** la tige (40), dans la partie intérieure de la vis de cisaillement, comporte une zone cylindrique (44), sur laquelle est montée ladite au moins une rondelle (30),
**en ce que** les rondelles (30) respectives sont bloquées entre une base (20) et la tête (50) de la vis de cisaillement,
et **en ce que** la tige (40) comporte une seule zone destinée à la rupture (42) dans la partie intérieure de la vis de cisaillement.

2. Vis de cisaillement selon la revendication 1,
**caractérisée en ce que** la base (20) et les rondelles (30), disposées sur celle-ci, comportent respectivement des saillies (28, 38) et des évidements (34) complémentaires deux à deux, par lesquels leur déplacement radial est empêché.

3. Vis de cisaillement selon la revendication 1 ou 2,
**caractérisée en ce que** la base (20) est réalisée avec un bout de vis (22) arrondi.

4. Vis de cisaillement selon l'une quelconque des revendications 1 à 3,
**caractérisée en ce que** la zone destinée à la rupture (42) est réalisée dans la tige (40) sous la forme d'une entaille radiale, en particulier sous la forme d'une rainure annulaire périphérique.

5. Vis de cisaillement selon l'une quelconque des revendications 1 à 4,
**caractérisée en ce que** la zone destinée à la rupture (42) est usinée à la hauteur de la rondelle (30) inférieure.

6. Vis de cisaillement selon l'une quelconque des revendications 1 à 5,
**caractérisée en ce que** la base (20) comporte une surface de support (27), qui porte les rondelles (30) respectives.

7. Vis de cisaillement selon l'une quelconque des revendications 1 à 6,
**caractérisée en ce que** la tête (50) de la vis de cisaillement (10) comporte une surface d'appui (58) annulaire, qui est appui contre la face supérieure de la rondelle (30) supérieure.

8. Vis de cisaillement selon l'une quelconque des revendications 1 à 7,
**caractérisée en ce que** la vis de cisaillement présente un assemblage vissé, un ajustement forcé ou un assemblage collé, par lequel les rondelles (30) sont bloquées entre la tête (50) et la base (20).

9. Vis de cisaillement selon l'une quelconque des revendications 1 à 8,
**caractérisée en ce que** la tige (40) comporte sur son extrémité inférieure un filetage extérieur (46), et est vissée dans un filetage intérieur (26) complémentaire dans une base (20) séparée.

10. Vis de cisaillement selon l'une quelconque des revendications 1 à 8,
**caractérisée en ce que** la tige (40) est réalisée d'un seul tenant avec la base (20) et **en ce que** la tête (50) comporte un écrou (54), qui est vissé sur un filetage extérieur (48) à l'extrémité supérieure de la tige (40).

11. Vis de cisaillement selon l'une quelconque des revendications 1 à 8,
**caractérisée en ce que** la tige (40) comporte, à son extrémité inférieure, une saillie qui est logée et fixée par complémentarité de forme et/ou par friction et/ou par complémentarité de matières dans un évidement complémentaire dans la base (20).

12. Vis de cisaillement selon l'une quelconque des revendications 1 à 8,
**caractérisée en ce que** la tige (40) est réalisée d'un seul tenant avec la base (20) et **en ce que**, sur l'extrémité supérieure de la tige (40), est rapporté un élément de serrage avec un évidement intérieur complémentaire, qui est assemblé à la tige (40) par complémentarité de forme et/ou par friction et/ou complémentarité de matières.

13. Procédé pour la réalisation d'une vis de cisaillement (10) avec un corps cylindrique, dont la face extérieure est munie d'un filetage (60), et avec une tige centrale (40), dont une extrémité possède une tête (50), qui est munie de surfaces de prise (52) pour un outil d'actionnement, au moins une rondelle (30) étant montée sur la tige (40), et la vis de cisaillement (10) étant munie d'une zone destinée à la rupture (42) dans la partie intérieure de la vis de cisaillement (10),
ledit procédé comportant les étapes suivantes:
- préparer une tige (40) qui comporte une zone (44) cylindrique,
- entailler une seule zone destinée à rupture (42) dans la zone cylindrique,
- rapporter un nombre de rondelles (30) sur la zone cylindrique,
- bloquer les rondelles (30) entre une base (20) et la tête (50) de la vis de cisaillement, et
- usiner un filetage (60) continu sur la face extérieure du corps cylindrique formé par la base (20) et les rondelles (30).

14. Procédé selon la revendication 13,
qui comporte, en outre, les étapes suivantes:
- préparer une tige (40) cylindrique, qui comporte, à l'une de ses extrémités, des surfaces de prise pour un outil d'actionnement, son autre extrémité, un filetage extérieur (46), et entre ceux-ci la zone destinée à la rupture (42);
- préparer une base (20) cylindrique avec un filetage intérieur (26) complémentaire pour le filetage extérieur (46) de la tige (40); et
- visser la base (20) avec la tige (40) pour bloquer entre elles les rondelles (30).

15. Procédé selon la revendication 13,
qui comporte, en outre, les étapes suivantes:
- préparer une tige (40) cylindrique, qui comporte, àl'une de ses extrémités, une base (20) élargie radialement et, à son autre extrémité, un filetage extérieur (48) et, entre celles-ci, la zone destinée à la rupture (42); et
- visser un écrou (54) sur le filetage extérieur (48) de la tige (40) pour bloquer les rondelles (30) entre l'écrou (54) et la base (20).

16. Procédé selon la revendication 15,
**caractérisé en ce que** l'on utilise un écrou (54) dont la face extérieure comporte des surfaces de prise (52) pour un outil d'actionnement.

17. Procédé selon la revendication 13,
qui comporte, en outre, les étapes suivantes:
- préparer une tige (40) cylindrique, qui comporte, à l'une de ses extrémités, des surfaces de prise pour un outil d'actionnement, à son autre extrémité, une saillie axiale et, entre celles-ci, la zone destinée à rupture (42);
- préparer une base (20) cylindrique avec un évidement complémentaire pour la saillie axiale de la tige (40); et
- presser la base (20) contre la tige (40), le cas échéant moyennant l'utilisation d'une colle à l'interface entre celles-ci, en vue de bloquer les rondelles (30) entre la base (20) et la tige (40).

18. Procédé selon la revendication 13,
qui comporte, en outre, les étapes suivantes:
- préparer une tige (40) cylindrique, qui comporte, à l'une de ses extrémités, une base (20) élargie radialement et, à son autre extrémité, une zone allongée et, entre celles-ci, la zone destinée à rupture (42); et
- emmanchée par pression un élément de serrage avec un évidement intérieur complémentaire au contour extérieur de l'extrémité supérieure de la tige (40), le cas échéant moyennant l'utilisation d'une colle sur l'interface entre ceux-ci, en vue de bloquer les rondelles (30) entre ceux-ci.
